# EUROPÄISCHE PATENTSCHRIFT

(11) **EP 2 629 648 B1**
(45) Veröffentlichungstag und Bekanntmachung des Hinweises auf die Patenterteilung: **15.01.2014**
(21) Anmeldenummer: 12769343.0
(22) Anmeldetag: 05.09.2012
(51) Int. Cl.: A47J 31/36

(54) **BRÜHEINRICHTUNG SOWIE KAFFEEMASCHINE MIT BRÜHEINRICHTUNG**
BREWING DEVICE AND COFFEE MACHINE HAVING A BREWING DEVICE
DISPOSITIF D'INFUSION ET MACHINE À CAFÉ POURVUE DE CE DISPOSITIF D'INFUSION

(30) Priorität: 23.09.2011 DE 102011053905
(43) Veröffentlichungstag der Anmeldung: 28.08.2013
(73) Patentinhaber: Eugster/Frismag AG, 8580 Amriswil (CH)
(72) Erfinder: BRENDLE, Christian, CH-8586 Erlen (CH)
(74) Vertreter: Wagner, Kilian
(86) Internationale Anmeldenummer: PCT/EP2012/067347
(87) Internationale Veröffentlichungsnummer: WO 2013/041378

(56) Entgegenhaltungen:
- EP-A1- 1 336 365
- WO-A1-2009/007804
- WO-A1-2012/114218
- DE-A1- 1 679 085

## Beschreibung

Die Erfindung betrifft eine Brüheinrichtung für eine Kaffeemaschine gemäß dem Oberbegriff des Anspruchs 1 mit einem einen Rückhaltefilter für gemahlene Kaffeebohnen (Kaffeepulver) tragenden Filterträger (insbesondere Brühkolben) und mit einem relativ zu dem Filterträger zwischen einer Beladeposition für gemahlene Kaffeebohnen und einer Brühposition verstellbaren Brühzylinder, der mit dem Rückhaltefilter des Filterträgers in der Brühposition eine Brühkammer begrenzt, die einen Einlass für unter Druck stehendes Brühwasser aufweist und mit einem Reinigungselement zum Entfernen von nach einem Brühvorgang an dem Rückhaltefilter anhaftenden Kaffeetrester bei einer Reinigungsbewegung.

Bekannte Kaffeevollautomaten umfassen fest integrierte oder alternativ zu Reinigungszwecken entnehmbare Brüheinrichtungen zum Brühen des Kaffees. Die bekannten Brüheinrichtungen umfassen je nach Bauweise, eine mehrteilige Brühkammer, in die unter Druck stehendes, heißes Brühwasser eingespeist wird, welches darin befindliche, gemahlene Kaffeebohnen (Kaffeepulver) durchströmt und dabei auslaugt, wobei die erhaltene Kaffeeflüssigkeit die Brühkammer durch einen Rückhaltefilter, beispielsweise ein metallisches Sieb verlässt in Richtung eines Auslasses. Die Brühkammer wird umfangsseitig begrenzt von einem Brühzylinder, der zwischen der zuvor erläuterten Brühposition, in welcher der Kaffee gebrüht wird und in welcher die Brühkammer von dem Rückhaltefilter verschlossen ist und einer Befüllposition verstellbar ist, in welcher in den Brühzylinder vor einem Brühvorgang, meist von einer integralen Kaffeemühle frisch gemahlenes Kaffeepulver eingefüllt wird.

Nach einem Brühvorgang wird der Brühzylinder (wieder) in Richtung seiner Beladeposition (Befüllposition) verstellt, relativ zu einem Abstreifer, der den zurückbleibenden Kaffeetresterkuchen von einem im Regelfall innerhalb des Brühzylinders verstellbaren Zylinderboden abstreift. Bei diesem Abstreifen vollführt der Brühzylinder eine rotatorische Bewegung, während ein gleichzeitig als Metallbügel ausgebildetes und außen an dem Brühzylinder festgelegtes Reinigungselement in geringem Abstand zu dem Rückhaltefilter rotatorisch vorbeiverschwenkt wird, mit dem Ziel den noch an dem Rückhaltefilter anhaftenden Kaffeetrester zu entfernen.

Bei den bekannten Brüheinrichtungen verbleiben häufig auch nach der rotatorischen Reinigungsbewegung des Reinigungselementes noch Tresterreste an dem Rückhaltefilter zurück, die bei einem späteren Brühvorgang in der Brühkammer verbleiben und sich somit nachteilig auf den Kaffeegeschmack auswirken können. Darüber hinaus besteht die Gefahr eines partiellen Verstopfens von winzigen Filteröffnungen im Rückhaltefilter für den Fall, dass der zurückbleibende Kaffeetrester zwischen zwei zeitlich länger beabstandeten Brühvorgängen am Rückhaltefilter antrocknet.

Aus der DE 1 679 085 A ist ein Kaffeeautomat mit einer Brüheinrichtung bekannt, bei welcher der Tresterkuchen nach dem Brühvorgang auf einem Rückhaltefilter liegen bleibt und mittels eines Abstreifers vom Rückhaltefilter abgeschoben wird, wobei hierdurch gleichzeitig eine Reinigung des Rückhaltefilters erfolgt.

Aus der US 5,638,739 A ist eine Brüheinrichtung bekannt, bei der der Tresterkuchen nach dem Brühvorgang auf dem Rückhaltefilter liegen bleibt und mittels eines Schiebers von diesem entfernt wird.

Auch die DE 30 14 452 A1 zeigt eine Brüheinrichtung, bei welcher der Tresterkuchen nach dem Brühvorgang auf dem Rückhaltefilter liegen bleibt und mittels eines Schiebers von diesem abgeräumt wird.

Aus der WO-A-2009/007804 ist eine Brüheinrichtung für eine Kaffeemaschine bekannt, die einen Rückhaltefilter für gemahlene Kaffeebohnen (Kaffeemehl) aufweist. Relativ zu dem Rückhaltefilter ist ein Brühzylinder zwischen einer Beladeposition für gemahlene Kaffeebohnen und einer Brühposition verstellbar, wobei der Brühzylinder in der Brühposition mit dem Filterhalter eine Brühkammer begrenzt, die einen Einlass für Brühwasser aufweist. Ein Brühkammerboden ist innerhalb des Brühzylinders verstellbar angeordnet. Der Brühzylinder ist bei einer Bewegung in die Beladeposition relativ zu einem Abstreifer bewegbar, um einen Tresterkuchen vom Brühkammerboden abzustreifen. Ferner ist ein Abstreifer zum Entfernen von nach einem Brühvorgang an dem Rückhaltefilter anhaftendem Kaffeetrester vorgesehen. Nachteilig ist, dass die Reinigung des Rückhaltefilters nicht optimal ist.

Ausgehend von dem vorgenannten Stand der Technik liegt der Erfindung daher die Aufgabe zugrunde, eine verbesserte Brüheinrichtung anzugeben, mit der eine verbesserte Reinigung des Rückhaltefilters sichergestellt wird. Insbesondere sollen Kaffeetresteranhaftungen am Rückhaltefilter und/oder an dem den Rückhaltefilter tragenden Filterträger vermieden werden. Darüber hinaus besteht die Erfindung darin, eine Kaffeemaschine, insbesondere einen Kaffeevollautomaten mit einer derartigen, verbesserten Brüheinrichtung anzugeben, die fest in die Kaffeemaschine integriert, oder alternativ vorzugsweise zu Reinigungszwecken einfach entnehmbar angeordnet sein kann.

Diese Aufgabe wird hinsichtlich der Brüheinrichtung mit den Merkmalen des Anspruchs 1 gelöst.

Hinsichtlich der Kaffeemaschine wird die Aufgabe mit den Merkmalen des Anspruchs 13 gelöst, wobei die Kaffeemaschine bevorzugt als Kaffeevollautomat ausgebildet ist, der neben der Brüheinheit zusätzlich eine Mahleinheit zum Mahlen von Kaffeebohnen aufweist.

Vorteilhafte Weiterbildungen der Erfindung sind in den Unteransprüchen angegeben.

Der Erfindung liegt der Gedanke zugrunde, bei einer gattungsgemäßen Kaffeemaschine, bei der der Tresterboden nach dem Brühvorgang nicht auf dem Rückhaltefilter sondern unterhalb des Rückhaltefilters auf dem Zylinderboden liegen bleibt und insbesondere durch aktives Verschwenken des Zylinderbodens (mit Brühzylinder) relativ zu einem Abstreifen vom Zylinderboden geschoben wird, die Reinigungswirkung des dem Filterträger und/oder dem Rückhaltefilter zugeordneten Reinigungselementes dadurch zu verbessern, dass zwischen dem Reinigungselement und dem Filterträger bzw. dem Rückhaltefilter eine Federkraft wirkt, die sicherstellt, dass das Reinigungselement während seiner Relativbewegung zu dem Rückhaltefilter, insbesondere einem metallischen Siebkörper, den Rückhaltefilter und/der den Filterträger berührt, d.h. entlang von diesem reibt bzw. (mechanisch) streift um hierdurch möglichst rückstandsfrei den noch anhaftenden Kaffeetrester zu entfernen. Hierdurch soll also die Reinigung des bevorzugt oberhalb angeordneten Filterträgers und/oder des Rückhaltefilters verbessert werden und nicht die Reinigung des zunächst noch den Tresterboden tragenden Zylinderboden (Brühkammerboden), der durch Verschwenken relativ zu dem Abstreifer (separat) gereinigt wird. Durch die Federkraft können zudem etwaige Fertigungstoleranzen oder sich im Betrieb ergebende Toleranzen überwunden werden, so dass über die Lebenszeit der Brüheinrichtung ein optimales Reinigungsverhalten sichergestellt wird. Dabei ist es grundsätzlich möglich entweder den Filterträger in Richtung Reinigungselement mit einer Federkraft zu belasten und/oder das Reinigungselement in Richtung Rückhaltefilter, wobei letztere Variante die bevorzugte Variante ist. Wesentlich ist jedenfalls, dass eine berührende Bewegung des Reinigungselements entlang des Rückhaltefilters und/oder des Filterträgers erreicht wird, um ein verbessertes Reinigungsergebnis zu erhalten. Insgesamt kann hierdurch die Kaffeequalität bei späteren Brühvorgängen verbessert werden. Darüber hinaus wird ein unerwünschtes Zusetzen von winzigen Filteröffnungen durch ansonsten antrocknenden Kaffeetrester sicher vermieden.

Bei dem Filterträger handelt es sich bevorzugt um einen Brühkolben, der in den Brühzylinder hineinverstellbar ist. Weiter bevorzugt ist der Filterhalter dabei in an sich bekannter Weise derart federnd gelagert, so dass dieser am Ende eines Brühvorgangs bei nachlassendem Druck im Brühzylinder automatisch in den Brühzylinder hineinverstellt wird, um den Trester, insbesondere in Richtung einer Auffangschale in der Kaffeemaschine trocken zu pressen.

Erfindungsgemäß ist vorgesehen, dass das Reinigungselement mit einer ersten Druckfeder bei der Reinigungsbewegung, von dem Brühzylinder weg, in Richtung auf den Rückhaltefilter federkraftbelastet ist. Dabei ist es besonders bevorzugt, wenn die erste Druckfeder mittelbar oder unmittelbar am Brühzylinder festgelegt ist bzw. wenn sich die erste Druckfeder an einem Federanschlag abstützt, welcher von dem Brühzylinder gebildet ist oder der an diesem festgelegt ist.

Ganz besonders bevorzugt ist es, wenn das Reinigungselement derart verstellbar angeordnet ist, dass es bei seiner Reinigungsbewegung, zumindest über einen Teilabschnitt dieser Reinigungsbewegung parallel zum Rückhaltefilter oder einer fakultativen Anlagefläche des Filterhalters für das Reinigungselement verfährt. Wichtig ist es dabei, dass das Reinigungselement den Rückhaltefilter und/oder die Anlagefläche des Filterhalters für das Reinigungselement nicht nur punktuell, d.h. an einer Stelle berührt, sondern über einen Verstellweg mit dem Rückhaltefilter bzw. der Anlagefläche in Kontakt bleibt, wobei dieser Verstellweg, über den hinweg das Reinigungselement den Rückhaltefilter und/oder die Anlagefläche berührt bevorzugt zumindest der halben, oder noch weiter bevorzugt (zumindest höherungsweise) der vollen Erstreckung des Rückhaltefilters bzw. der Anlagefläche in dieser Verstellrichtung entspricht. Besonders zweckmäßig ist es für den bevorzugten Fall der geraden bzw. ebenen Ausbildung des Rückhaltefilters und/oder der Bewegung zurück in die Ausgangsposition für die translatorische Bewegung zum Verschließen der Brühkammer. Besonders zweckmäßig ist es, wenn das Reinigungselement von dem Brühzylinder bei seinem rotatorischen Bewegungsabschnitt in die Reinigungsbewegung mitgenommen wird.

In Weiterbildung der Erfindung ist mit Vorteil vorgesehen, dass ein der ersten Druckfeder, insbesondere einer Schraubendruckfeder, zugeordneter, zuvor bereits erwähnter erster Federanschlag während einer Bewegungsphase des Reinigungselementes parallel zum Rückhaltefilter und/oder einer Anlagefläche des Filterhalters rotatorisch verschwenkbar angeordnet ist, insbesondere in dem dieser erste Federanschlag mit dem verschwenkbaren Brühzylinder gekoppelt bzw. von diesem gebildet ist.

Als besonders zweckmäßig hat es sich erwiesen, wenn das Reinigungselement Bestandteil eines Reinigungsbügels ist, wobei das Reinigungselement bevorzugt zwei federkraft belastete, bevorzugt teleskopisch verstellbare Schenkel des Bügels, insbesondere geradlinig in eine Querrichtung miteinander verbindet. Für einen gleichmäßigen Federandruck des Reinigungselementes an dem Rückhaltefilter und/oder dem Filterhalter hat es sich als vorteilhaft erwiesen, wenn dem Reinigungselement zusätzlich zu der ersten Druckfeder eine von dieser beabstandete zweite Druckfeder zugeordnet ist, wobei es noch weiter bevorzugt ist, wenn die erste Druckfeder im Bereich eines ersten Schenkels des Reinigungsbügels und die zweite Druckfeder im Bereich des zweiten Schenkels des Reinigungsbügels angeordnet ist.

Besonders bevorzugt ist es, wenn die Brühkammer auf einer von dem Rückhaltefilter abgewandten Seite von einem Zylinderboden begrenzt ist, der noch weiter bevorzugt innerhalb des Zylinders, insbesondere in Abhängigkeit der Brühzylinderposition, verstellbar ist, bevorzugt derart, dass dieser bei einer, vorzugsweise translatorischen, Verstellbewegung des Brühzylinders von dem Rückhaltefilter weg, d.h. nach einem Brühvorgang im Brühzylinder in Richtung Rückhaltefilter verfährt und dabei einen im Brühzylinder nach dem Brühen verbleibenden Tresterkuchen im Brühzylinder nach vorne bzw. oben verschiebt, so dass dann bei einem weiteren, insbesondere rotatorischen, Bewegungsabschnitt des Brühzylinders relativ zu einem Abstreifer der Tresterkuchen von dem Zylinderboden abgestriffen wird und bevorzugt über eine Rampe seitlich des Brühzylinders in einen Tresterbehälter abrutschen kann.

Im Hinblick auf eine bauraumoptimierte Anordnung hat es sich weiter als besonders vorteilhaft herausgestellt, wenn das Reinigungselement dabei derart angeordnet ist, dass dieses gegen Ende seiner Verstellbewegung relativ zu dem Filterhalter den vorerwähnten Abstreifer zum Abstreifen des Tresterkuchens von dem Brühkammerboden überschwenkt.

Besonders bevorzugt ist eine Ausführungsvariante, bei der der Rückhaltefilter eine ebene, geradlinige Oberfläche aufweist. Bevorzugt ist der Rückhaltefilter dabei umfänglich kreisförmig konturiert. Zusätzlich oder alternativ ist weiterbildungsgemäß vorgesehen, dass etwaige Fixiermittel zum Fixieren des Rückhaltefilters am Filterhalter eine Rückhaltefilteroberfläche nicht überragen. Wird beispielsweise eine, insbesondere zentrische, Fixierschraube zum Fixieren des Rückhaltefilters am Filterhalter eingesetzt, so kann diese beispielsweise als Senkkopfschraube ausgebildet sein, um eine die abstreifende Reinigungsbewegung des Reinigungselementes behindernde Stufe bzw. einen Vorsprung zu vermeiden.

Das im Stand der Technik vorgesehene, den Rückhaltefilter nicht berührende Reinigungselement ist aus Metall bzw. als Metalldraht ausgebildet. Eine solche Ausbildung kann auch bei einer nach dem Konzept der Erfindung ausgebildeten Brüheinheit zum Einsatz kommen. Bevorzugt ist es jedoch, wenn das Reinigungselement aus einem weicheren Material, insbesondere Kunststoff ausgebildet ist, und/oder eine Abstreiflippe, insbesondere aus einem Elastomerwerkstoff aufweist, um den Rückhaltefilter mechanisch möglichst wenig bei der Reibbewegung zu belasten. Ein etwaiger auftretender Materialverlust aufgrund von Reibung kann aufgrund der Federwirkung von Federmitteln höhenmäßig ausgeglichen werden.

Bevorzugt befindet sich das Reinigungselement während eines Brühvorgangs in einer Parkposition, insbesondere seitlich des Filterträgers, wobei es besonders bevorzugt ist, wenn sich das Reinigungselement in der Parkposition so abstützt, dass die mindestens eine Druckfeder komprimiert, d.h. elastisch gestaucht ist.

Die Erfindung führt auch auf eine Kaffeemaschine, insbesondere einen Kaffeevollautomaten mit einer nach dem Konzept der Erfindung ausgebildeten Brüheinrichtung, die entweder fest in dieser verbaut ist oder für Reinigungszwecke in an sich bekannter Weise entnehmbar angeordnet ist. Bevorzugt handelt es sich um eine Kaffeemaschine, mit der Espresso, normaler Kaffee, Cappuccino, etc. herstellbar ist. Weiter bevorzugt umfasst die Kaffeemaschine ein Mahlwerk zum frischen Mahlen von Kaffeebohnen, wobei auch in diesem Fall eine Einfüllmöglichkeit für bereits außerhalb der Kaffeemaschine gemahlene Kaffeebohnen vorgesehen sein kann.

Weitere Vorteile, Merkmale und Einzelheiten der Erfindung ergeben sich aus der nachfolgenden Beschreibung eines bevorzugten Ausführungsbeispiels sowie anhand der Zeichnungen.

Diese zeigen in:

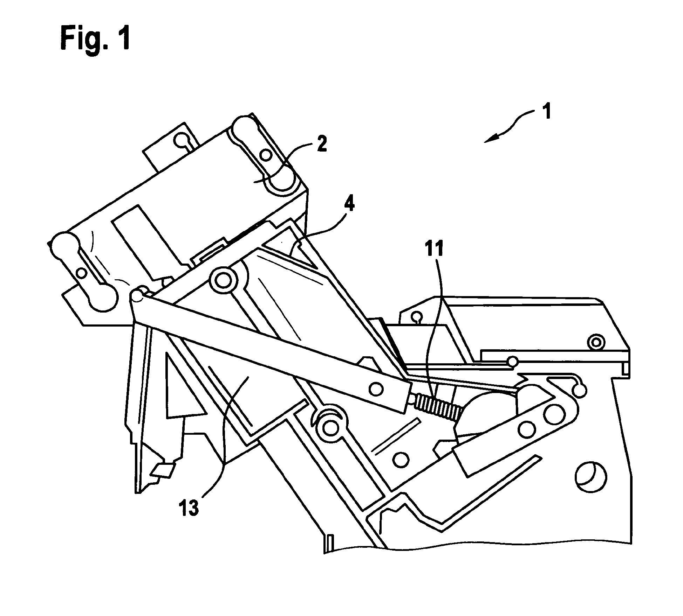

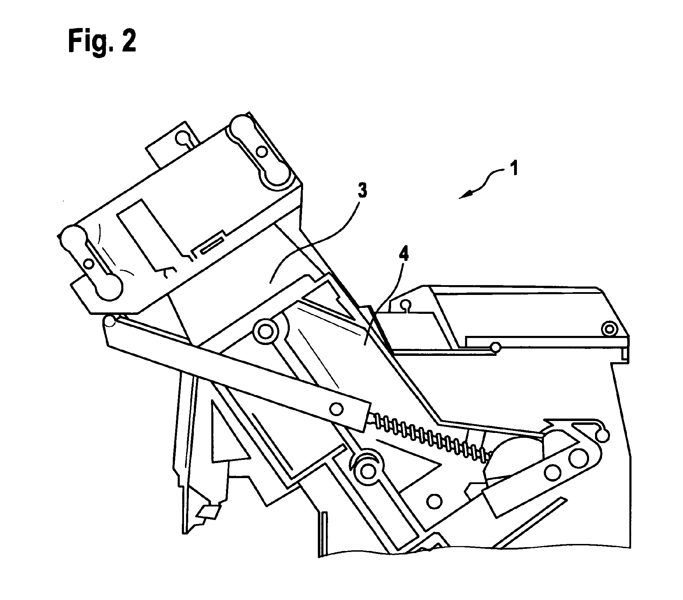

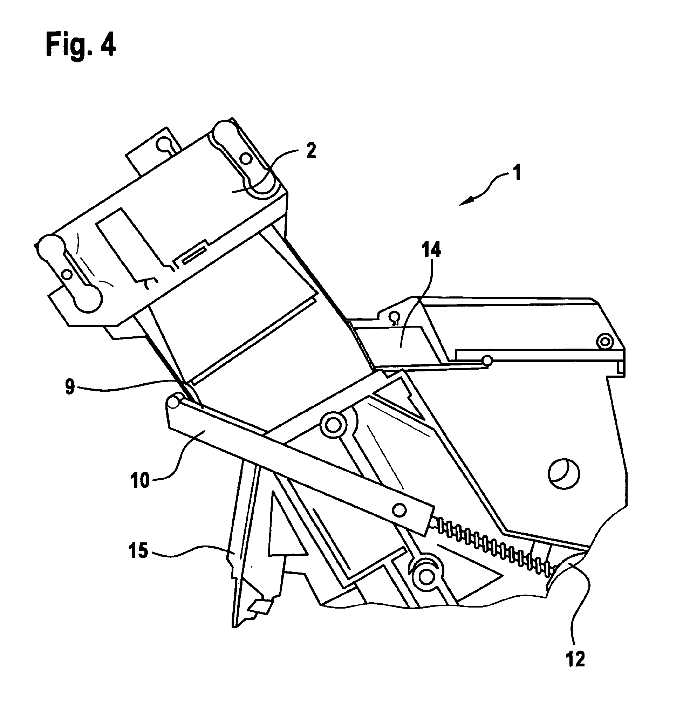

- Fig. 1 bis Fig. 6:: unterschiedliche Bewegungszustände einer Brüheinheit einer Kaffeemaschine.

In den Figuren sind gleiche Elemente und Elmente mit der gleichen Funktion mit den gleichen Bezugszeichen gekennzeichnet.

In den Fig. 1 bis 6 ist eine zu Reinigungszwecken aus einer Kaffeemaschine entnehmbare Brüheinrichtung 1 gezeigt, mit der aus gemahlenen Kaffeebohnen unter Zuhilfenahme von heißem, unter Druck stehendem Brühwasser ein Kaffeeprodukt herstellbar ist.

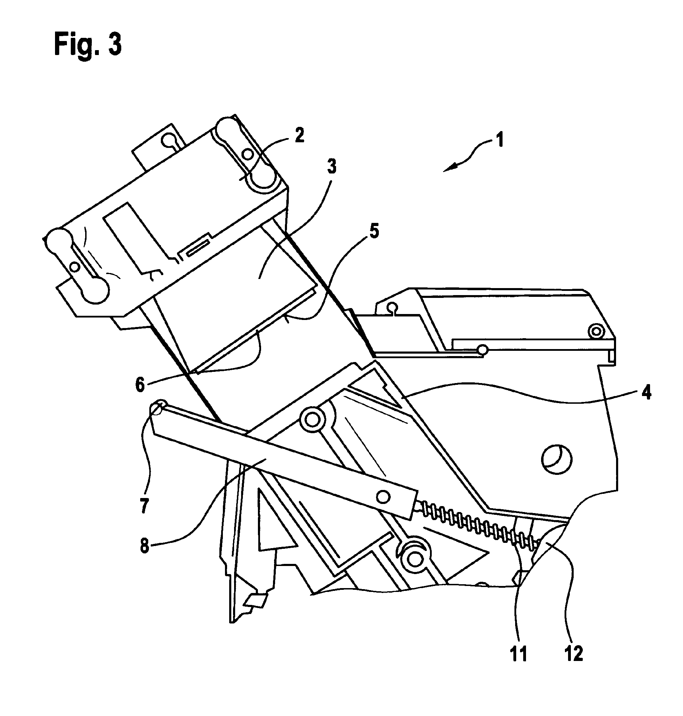

Die Brüheinrichtung 1 umfasst eine spritzgegossene Tragstruktur 2. Diese trägt u.a. in einer Führungskulisse einen als Brühkolben ausgebildeten, beispielsweise in Fig. 3 gezeigten Filterhalter 3 an dessen einem verstellbaren Brühzylinder 4 zugewandten Stirnseite 5 eine als Metallsieb ausgebildeter Rückhaltefilter 6 mit einer zentrischen, versenkten Senkkopfschraube festgelegt ist.

Der Brühzylinder 4 begrenzt mit dem Filterhalter 3 und einem nicht dargestellten, im Brühzylinder 4 vorgesehenen Brühzylinderboden eine Brühkammer, in die durch Öffnungen im Brühzylinderboden unter Druck stehendes heißes Brühwasser eingeleitet werden kann.

An den Brühzylinder 4 (Brühzylinderbaugruppe) ist ein aus Kunststoff ausgebildetes Reinigungselement 7 angeordnet bzw. mit diesem gekoppelt, welches sich über die gesamte Breitenerstreckung des Rückhaltefilters 6 erstreckt. Das Reinigungselement 7 wird von einer Querstrebe eines Kunststoff-Reinigungsbügels 8 gebildet, der zwei parallele Teleskopschenkel 9, 10 umfasst, die über das Reinigungselement 7 miteinander verbunden sind. Dem mit den Bezugszeichen 10 gekennzeichneten Teleskopschenkel 10 ist eine erste Druckfeder 11 zugeordnet, die sich einenends an einem oberen Teil des längenveränderlichen Teleskopschenkels 10 abstützt und anderenends an einem Federanschlag 12, der am Brühzylinder 4 festgelegt ist, so dass eine Verstellbewegung des Brühzylinders 4 automatisch auch immer eine Verstellbewegung des Reinigungselementes zur Folge hat. Zum Verstellen des Brühzylinders 4 ist ein nicht dargestellter Elektromotor vorgesehen, der in eine, an sich bekannte Formschlusskupplung der Brüheinrichtung eingreift und deren Rotationsbewegung über eine an sich ebenfalls bekannte Kulissenführung zu der gewünschten, translatorisch sowie rotatorischen Verstellbewegung des Brühzylinders 4 führt.

Zusätzlich zu der ersten Druckfeder 11 ist eine in den Ansichten der Figuren nicht zu erkennende zweite Druckfeder vorgesehen, die in analoger Weise den mit den Bezugszeichen 9 gekennzeichneten Teleskopschenkeln 9 zugeordnet ist. Die beiden identischen Druckfedern 11 sorgen für eine gleichmäßige Federkraftbelastung des Reinigungsbügels 8 und damit des Reinigungselementes 7 in eine Richtung von dem Brühzylinder 4 weg bei einer Reinigungsbewegung auf den Rückhaltefilter 6.

Im Folgenden wird die Funktionsweise der Brüheinrichtung 1 und insbesondere des Reinigungselementes 7 beschrieben.

In Fig. 1 befindet sich der Brühzylinder 4 in einer Brühposition - die Brühkammer 13 ist verschlossen. Das Reinigungselement 7 liegt seitlich an der Tragstruktur 2 in einer Parkposition an, die Druckfedern 11 sind maximal komprimiert.

In dieser Stellung wird unter Druck stehendes heißes Brühwasser in die Brühkammer 13 geleitet und verlässt diese durch feinste Öffnungen im Rückhaltefilter 6 und fließt durch einen nicht gezeigten Auslauf in ein Trinkbehältnis.

Nach Beendigung des Brühvorgangs wird der Brühzylinder 4 translatorisch relativ zum Rückhaltefilter 6, hier in der Zeichnungsebene nach schräg unten verstellt, so dass der Filterhalter 3, genauer ein Brühkolben in seinem oberen Abschnitt sichtbar wird. Gleichzeitig kommt der Reinigungsbügel 8 aus seiner Parkposition frei und kann sich maximal weit, unterstützt durch die Druckfedern 11 von dem Brühzylinder 4 entfernen.

In der in Fig. 3 gezeigten Position ist die translatorische Verstellbewegung des Brühzylinders 4 relativ zu dem Filterhalter 3 beendet. Zu erkennen ist dies durch den maximalen Abstand zwischen Brühzylinder 4 und Rückhaltefilter 6. Ein bis dahin innerhalb des Brühzylinders 4 befindlicher, ausgelaugter, komprimierter Tresterkuchen wurde mittels eines nicht gezeigten Brühzylinderbodens nach oben verstellt und befindet sich nun quasi auf dem Brühzylinder, was in den Zeichnungen nicht dargestellt ist. Das Reinigungselement 7 befindet sich in der Zeichnungsebene links und unterhalb bzw. beabstandet zu dem Rückhaltefilter 6.

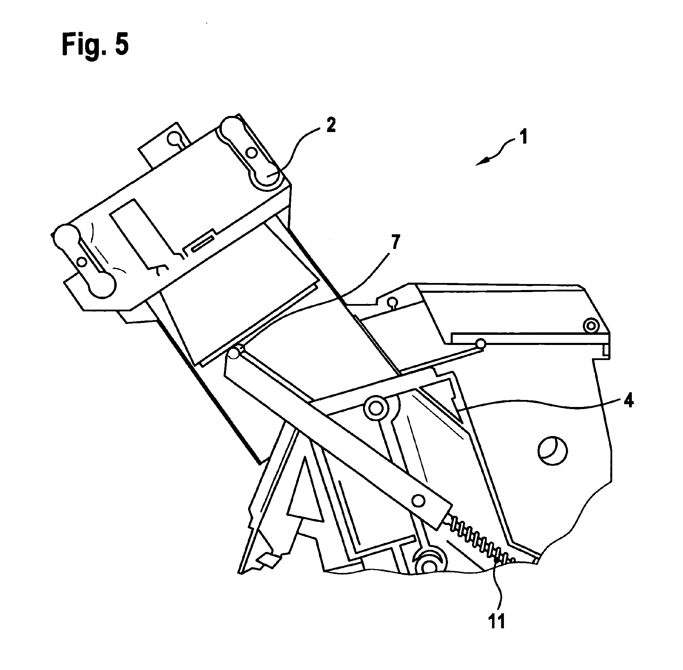

Nun folgt eine rotatorische Bewegung des Brühzylinders 4 in der Zeichnungsebene nach rechts relativ zu einem Abstreifer 14, der bei der rotatorischen Bewegung des Brühzylinders 4 sicherstellt, dass der nicht gezeigte Tresterkuchen abgestriffen wird und schlussendlich über eine seitliche Rampe 15 des Brühzylinders 4 in einen nicht gezeigten Tresterbehälter abrutschen kann. Bei der rotatorsichen Bewegung berührt das Reinigungselement 7, wie gut aus Fig. 5 zu erkennen ist, die den Brühzylinder 4 zugewandte Seite des Rückhaltefilters 6 und streift entlang von diesem (diesen weiterhin brührend), wobei bei dieser Reinigungsbewegung noch anhaftender Kaffeetrester abgestriffen wird. Trotz der rotatorischen Verstellbewegung des Brühzylinders 4 verfährt das Reinigungselement 7 parallel zu dem Rückhaltefilter 6, wobei bei dieser Reinigungsbewegung die Druckfedern 11 die Höhendifferenz ausgleichen und stärker komprimiert werden.

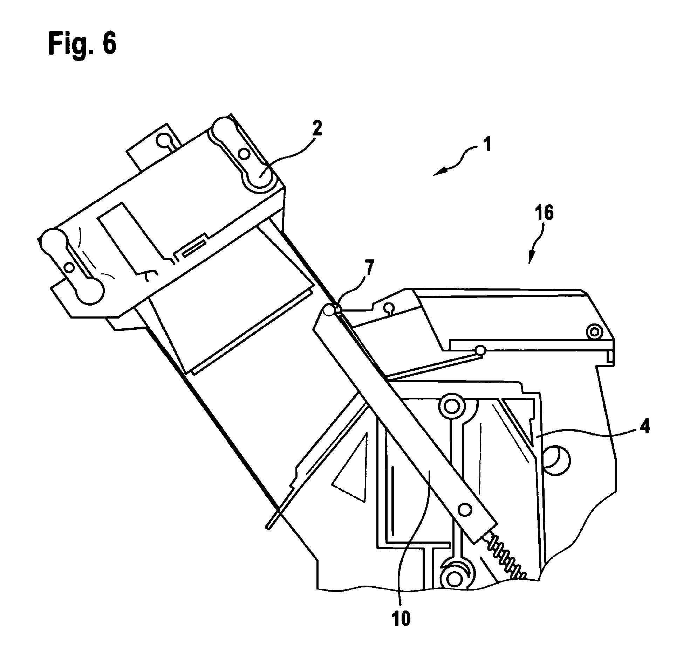

Wie aus Fig. 6 zu erkennen ist, befindet sich das Reinigungselement 7 nach der Reinigungsbewegung bzw. nach Beendigung des Verschwenkbewegungsabschnittes des Brühzylinders 4 benachbart und beabstandet zu dem Rückhaltefilter 6. Der Brühzylinder 4 befindet sich in einer Ladeposition, in welcher durch eine nicht gezeigte obere Öffnung 16 gemahlene Kaffeebohnen (Kaffee) eingefüllt werden können, wobei das Kaffeepulver entweder unmittelbar von einem integralen Mahlwerk der Kaffeemaschine zugeführt wird oder alternativ von Hand oder weiter alternativ aus einem Pulvervorratsbehälter.

Nach dem Beladevorgang erfolgt eine Bewegung des Brühzylinders in die entgegengesetzte Richtung (Bewegungsabfolge dann von Fig. 6 bis 1) in die Brühposition, in der dem Kaffeepulver während des Brühprozesses unter Druck stehendes Heißwasser zugesetzt wird.

### Bezugszeichenliste

- 1: Brüheinrichtung
- 2: Tragstruktur
- 3: Filterhalter
- 4: Brühzylinder
- 5: Stirnseite
- 6: Rückhaltefilter
- 7: Reinigungselement
- 8: Reinigungsbügel
- 9: Teleskopschenkel
- 10: Teleskopschenkel
- 11: Druckfeder
- 12: Federanschlag
- 13: Brühkammer
- 14: Abstreifer
- 15: Rampe
- 16: Öffnung

## Patentansprüche

1. Brüheinrichtung für eine Kaffeemaschine, mit einem einen Rückhaltefilter (6) für gemahlene Kaffeebohnen tragenden, insbesondere als Filterträger ausgebildeten, Filterhalter (3) und mit einem relativ zu dem Filterhalter (3) zwischen einer Beladeposition für gemahlenen Kaffeebohnen und einer Brühposition verstellbaren Brühzylinder (4), der mit dem Rückhaltefilter (6) des Filterhalters (3) in der Brühposition eine Brühkammer (13) begrenzt, die einen Einlass für unter Druck stehendes Brühwasser aufweist, wobei ein Brühkammerboden innerhalb des Brühzylinders verstellbar ist und der Brühzylinder bei einem Bewegungsschritt in die Beladeposition relativ zu einem Abstreifer (14) bewegbar ist, um einen Tresterkuchen von dem Brühkammerboden abzustreifen, und mit einem Reinigungselement (7) zum Entfernen von nach einem Brühvorgang an dem Rückhaltefilter (6) anhaftenden Kaffeetrester bei einer Reinigungsbewegung,
**dadurch gekennzeichnet,**
**dass** der Filterhalter (3) und das Reinigungselement (7) so gegeneinander federkraftbelastet sind, dass das Reinigungselement (7) bei seiner Reinigungsbewegung den Rückhaltefilter (6) und/oder den Filterhalter (3) berührt und dadurch den anhaftenden Kaffeetrester abstreift, und dass das Reinigungselement (7) mit einer ersten Druckfeder (11) bei der Reinigungsbewegung von dem Brühzylinder weg in Richtung auf den Rückhaltefilter (6), insbesondere nach oben, federkraftbelastet ist.

2. Brüheinrichtung nach Anspruch 1,
**dadurch gekennzeichnet,**
**dass** das Reinigungselement (7) derart verstellbar angeordnet ist, dass es bei seiner Reinigungsbewegung, zumindest abschnittsweise, parallel zum Rückhaltefilter (6) oder einer Anlagefläche des Filterhalters (3) verfährt und dieses bzw. diese über einen Verstellweg, der vorzugsweise zumindest der halben oder der vollen Erstreckung des Rückhaltefilters (6) bzw. der Anlagefläche in der Verstellrichtung entspricht, berührt.

3. Brüheinrichtung nach einem der Ansprüche 1 oder 2,
**dadurch gekennzeichnet,**
**dass** das Reinigungselement (7) mechanisch mit dem Brühzylinder (4) gekoppelt ist, derart, dass eine elektromotorische Verstellbewegung, insbesondere eine Schwenkbewegung, des Brühzylinders die Reinigungsbewegung des Reinigungselementes (7) bewirkt.

4. Brüheinrichtung nach einem der vorhergehenden Ansprüche,
**dadurch gekennzeichnet,**
**dass** ein der ersten Druckfeder (11) zugeordneter erster Federanschlag (12) während einer translatorischen Bewegungsphase des Reinigungselementes (7) rotatorisch verschwenkbar angeordnet ist.

5. Brüheinrichtung nach einem der vorhergehenden Ansprüche,
**dadurch gekennzeichnet,**
**dass** das Reinigungselement (7) Bestandteil eines Reinigungsbügels (8) ist, der mit einer zweiten Druckfeder (11) bei der Reinigungsbewegung in Richtung auf das Rückhaltefilter (6) federkraftbelastet ist.

6. Brüheinrichtung nach Anspruch 5,
**dadurch gekennzeichnet,**
**dass** der Reinigungsbügel zwei parallele Teleskopschenkel (9, 10) umfasst.

7. Brüheinrichtung nach einem der vorhergehenden Ansprüche,
**dadurch gekennzeichnet,**
**dass** das Reinigungselement (7) derart angeordnet ist, dass dieses gegen Ende seiner Verstellbewegung relativ zu dem Filterhalter (3) einen Abstreifer (14) zum Abstreifen eines Tresterkuchens von dem, vorzugsweise relativ zu einer Umfangswand des Brühzylinders (4) verstellbaren, Brühkammerboden überschwenkt.

8. Brüheinrichtung nach einem der vorhergehenden Ansprüche,
**dadurch gekennzeichnet,**
**dass** das Rückhaltefilter (6) eine ebene Oberfläche aufweist und/oder dass Befestigungsmittel zum Fixieren des Rückhaltefilters (6) am Filterhalter (3) die Rückhaltefilteroberfläche nicht überragen.

9. Brüheinrichtung nach einem der vorhergehenden Ansprüche,
**dadurch gekennzeichnet,**
**dass** das Reinigungselement (7) aus Kunststoff ausgebildet ist und/oder eine Abstreiflippe, insbesondere aus einem Elastomer-werkstoff, aufweist.

10. Brüheinrichtung nach einem der vorhergehenden Ansprüche,
**dadurch gekennzeichnet,**
**dass** das Reinigungselement (7) bei seiner Reinigungsbewegung von unten nach oben in Richtung auf den Rückhaltefilter (6) federkraft belastet ist.

11. Brüheinrichtung nach einem der vorhergehenden Ansprüche,
**dadurch gekennzeichnet,**
**dass** das Reinigungselement während des Brühvorgangs in einer Parkposition angeordnet ist, insbesondere seitlich des Filterhalters, wobei sich das Reinigungselement in der Parkposition an einer Tragstruktur (2) abstützt und bevorzugt die erste Druckfeder maximal komprimiert ist.

12. Brüheinrichtung nach Anspruch 11,
**dadurch gekennzeichnet,**
**dass** das Reinigungselement nach Beendigung eines Brühvorgangs aus der Parkposition, insbesondere durch Verschwenken des Brühzylinders, nach unten bewegbar ist.

13. Kaffeemaschine, insbesondere Kaffeevollautomat, mit einer Brüheinrichtung (1) nach einem der vorhergehenden Ansprüche, die entweder fest in dieser verbaut ist oder für Reinigungszwecke entnehmbar angeordnet ist.

## Claims

1. A brewing device for a coffee machine, comprising a filter holder (3), which holds a retention filter (6) for ground coffee beans and which is embodied in particular as a filter support (3) and comprising a brewing cylinder (4), which can be adjusted relative to the filter holder (3) between a loading position for ground coffee beans and a brewing position, and which bounds a brewing chamber (13) together with the retention filter (6) of the filter holder (3) in the brewing position, which brewing chamber encompasses an inlet for pressurized brewing water, wherein a brewing chamber bottom can be adjusted within the brewing cylinder and the brewing cylinder can be moved into the loading position relative to a scraper (14) in response to a movement step in order to scrape a cake of used grounds from the brewing chamber bottom, and comprising a cleaning element (7) for removing used coffee grounds adhering to the retention filter (6) after a brewing process in response to a cleaning movement,
**characterized in**
**that** filter holder (3) and the cleaning element (7) are spring-loaded toward each other such that, in response to its cleaning movement, the cleaning element (7) touches the retention filter (6) and/or the filter holder (3) and thereby scrapes off the adhering used coffee grounds, and in that the cleaning element (7) is spring-loaded away from the brewing cylinder in the direction of the retention filter (6), in particular upwards, by means of a first compression spring (11) in response to the cleaning movement.

2. The brewing device according to claim 1,
**characterized in**
**that** the cleaning element (7) is adjustably arranged such that, in response to its cleaning movement, it moves parallel to the retention filter (6) or a contact surface of the filter holder (3) at least in sections and that it contacts said retention filter (6) or said contact surface, respectively, across an adjustment path, which preferably corresponds at least to half of or to the entire extension of the retention filter (6) or of the contact surface, respectively, in the adjustment direction.

3. The brewing device according to one of claims 1 or 2,
**characterized in**
**that** the cleaning element (7) is mechanically coupled to the brewing cylinder (4) such that an electromotive adjusting movement, in particular a pivoting movement, of the brewing cylinder effects the cleaning movement of the cleaning element (7).

4. The brewing device according to one of the preceding claims,
**characterized in**
**that** a first spring stop (12), which is assigned to the first compression spring (11), is arranged so as to be rotationally pivotable during a translatory movement phase of the cleaning element (7).

5. The brewing device according to one of the preceding claims,
**characterized in**
**that** the cleaning element (7) is part of a cleaning clamp (8), which is spring-loaded by means of a second compression spring (11) in response to the cleaning movement in the direction of the retention filter (6).

6. The brewing device according to claim 5,
**characterized in**
**that** the cleaning clamp comprises two parallel telescopic legs (9, 10).

7. The brewing device according to one of the preceding claims,
**characterized in**
**that** the cleaning element (7) is arranged such that, towards the end of its adjusting movement, said cleaning element pivots relative to the filter holder (3) across a scraper (14) for scraping a cake of used grounds from the brewing chamber bottom, which is preferably adjustable relative to a circumferential wall of the brewing cylinder (4).

8. The brewing device according to one of the preceding claims,
**characterized in**
**that** the retention filter (6) encompasses a flat surface and/or that fastening means for fixing the retention filter (6) to the filter holder (3) do not project above the retention filter surface.

9. The brewing device according to one of the preceding claims,
**characterized in**
**that** the cleaning element (7) is made of plastic and/or encompasses a scraping lip, in particular made of an elastomer material.

10. The brewing device according to one of the preceding claims,
**characterized in**
**that**, in response to its cleaning movement, the cleaning element (7) is spring-loaded from bottom to top in the direction of the retention filter (6).

11. The brewing device according to one of the preceding claims,
**characterized in**
**that** the cleaning element is arranged in a parking position during the brewing process, in particular laterally of the filter holder, wherein, in the parking position, the cleaning element is supported on a support structure (2) and the first compression spring is preferably compressed at the maximum level.

12. The brewing device according to claim 11,
**characterized in**
**that**, after ending a brewing process, the cleaning element can be moved out of the parking position, in particular by pivoting the brewing cylinder downwards.

13. A coffee machine, in particular a fully-automatic coffee machine, comprising a brewing device (1) according to one of the preceding claims, which is either fixedly installed therein or which is arranged so as to be removable for cleaning purposes.

## Revendications

1. Dispositif d'infusion pour une machine à café, comprenant un dispositif de retenue de filtre (3) supportant un filtre de retenue (6) pour des grains de café moulus et réalisé en particulier sous forme de porte-filtre, et comprenant un cylindre d'infusion (4) pouvant être déplacé par rapport au dispositif de retenue de filtre (3) entre une position de chargement pour des grains de café moulus et une position d'infusion, lequel cylindre d'infusion délimite dans la position d'infusion, conjointement avec le filtre de retenue (6) du dispositif de retenue de filtre (3), une chambre d'infusion (13) qui comprend une entrée pour de l'eau d'infusion sous pression, un fond de la chambre d'infusion pouvant être déplacé à l'intérieur du cylindre d'infusion et le cylindre d'infusion pouvant, lors d'une étape de mouvement, être déplacé dans la position de chargement par rapport à un élément de raclage (14), afin de racler un gâteau de marc du fond de la chambre d'infusion, et comprenant un élément de nettoyage (7) pour enlever, lors d'un mouvement de nettoyage, le marc de café adhérant au filtre de retenue (6) après une opération d'infusion, **caractérisé en ce que** le dispositif de retenue de filtre (3) et l'élément de nettoyage (7) sont sollicités par ressort l'un contre l'autre de telle sorte que, lors de son mouvement de nettoyage, l'élément de nettoyage (7) soit en contact avec le filtre de retenue (6) et/ou le dispositif de retenue de filtre (3) et racle de ce fait le marc de café adhérent, et **en ce que** l'élément de nettoyage (7) est sollicité par la force d'un premier ressort de compression (11), en particulier vers le haut, lors du mouvement de nettoyage à l'écart du cylindre d'infusion en direction du filtre de retenue (6).

2. Dispositif d'infusion selon la revendication 1, **caractérisé en ce que** l'élément de nettoyage (7) est disposé de manière à pouvoir être déplacé de telle sorte qu'il se déplace, lors de son mouvement de nettoyage, au moins en partie parallèlement au filtre de retenue (6) ou à une surface d'appui du dispositif de retenue de filtre (3) et soit en contact avec celui-ci ou celle-ci sur une course de déplacement qui correspond de préférence au moins à la moitié, ou à la totalité, de l'étendue du filtre de retenue (6) ou de la surface d'appui dans la direction de déplacement.

3. Dispositif d'infusion selon l'une quelconque des revendications 1 ou 2,**caractérisé en ce que** l'élément de nettoyage (7) est accouplé mécaniquement au cylindre d'infusion (4) de telle sorte qu'un mouvement de déplacement électromotorisé, en particulier un mouvement de pivotement, du cylindre d'infusion provoque le mouvement de nettoyage de l'élément de nettoyage (7).

4. Dispositif d'infusion selon l'une quelconque des revendications précédentes, **caractérisé en ce qu'**une première butée de ressort (12) associée au premier ressort de compression (11) est disposée de manière à pouvoir pivoter de façon rotative pendant une phase de mouvement de translation de l'élément de nettoyage (7).

5. Dispositif d'infusion selon l'une quelconque des revendications précédentes, **caractérisé en ce que** l'élément de nettoyage (7) fait partie d'un étrier de nettoyage (8) qui est sollicité par la force d'un deuxième ressort de compression (11) lors du mouvement de nettoyage en direction du filtre de retenue (6).

6. Dispositif d'infusion selon la revendication 5, **caractérisé en ce que** l'étrier de nettoyage comporte deux branches télescopiques parallèles (9, 10).

7. Dispositif d'infusion selon l'une quelconque des revendications précédentes, **caractérisé en ce que** l'élément de nettoyage (7) est disposé de telle sorte que, vers la fin de son mouvement de déplacement par rapport au dispositif de retenue de filtre (3), il fasse pivoter un élément de raclage (14) afin de racler un gâteau de marc du fond de la chambre d'infusion pouvant être déplacé de préférence par rapport à une paroi périphérique du cylindre d'infusion (4).

8. Dispositif d'infusion selon l'une quelconque des revendications précédentes, **caractérisé en ce que** le filtre de retenue (6) présente une surface plane et/ou **en ce que** des moyens de fixation pour fixer le filtre de retenue (6) sur le dispositif de retenue de filtre (3) ne dépassent pas au-delà de la surface du filtre de retenue.

9. Dispositif d'infusion selon l'une quelconque des revendications précédentes, **caractérisé en ce que** l'élément de nettoyage (7) est réalisé en plastique et/ou comprend une lèvre de raclage, en particulier constituée d'un matériau élastomère.

10. Dispositif d'infusion selon l'une quelconque des revendications précédentes, **caractérisé en ce que**, lors de son mouvement de nettoyage, l'élément de nettoyage (7) est sollicité par une force de ressort du bas vers le haut en direction du filtre de retenue (6).

11. Dispositif d'infusion selon l'une quelconque des revendications précédentes, **caractérisé en ce que**, pendant l'opération d'infusion, l'élément de nettoyage est disposé dans une position de repos, en particulier latéralement par rapport au dispositif de retenue de filtre, l'élément de nettoyage s'appuyant contre une structure de support (2) dans la position de repos et comprimant de préférence au maximum le premier ressort de compression.

12. Dispositif d'infusion selon la revendication 11, **caractérisé en ce qu'**une fois une opération d'infusion terminée, l'élément de nettoyage peut être déplacé vers le bas hors de la position de repos, en particulier par pivotement du cylindre d'infusion.

13. Machine à café, en particulier machine à café entièrement automatique, comprenant un dispositif d'infusion (1) selon l'une quelconque des revendications précédentes, qui est soit installé fixement dans celle-ci soit disposé de manière amovible à des fins de nettoyage.
